(19) Europäisches Patentamt
European Patent Office
Office européen des brevets

(11) Veröffentlichungsnummer : **0 126 830**
**B1**

(12) # EUROPÄISCHE PATENTSCHRIFT

(45) Veröffentlichungstag der Patentschrift : **29.07.87**

(51) Int. Cl.[4] : **D 06 L 3/12**, C 09 B 67/54

(21) Anmeldenummer : **83810251.5**

(22) Anmeldetag : **09.06.83**

(54) **Verfahren zur Umwandlung schwerlöslicher Salze anionischer Farbstoffe und optischer Aufheller in leichter lösliche Salze mittels Kationenaustausch.**

(30) Priorität : **04.05.83 CH 2425/83**

(43) Veröffentlichungstag der Anmeldung : **05.12.84 Patentblatt 84/49**

(45) Bekanntmachung des Hinweises auf die Patenterteilung : **29.07.87 Patentblatt 87/31**

(84) Benannte Vertragsstaaten : **CH DE FR GB LI**

(56) Entgegenhaltungen : **FR-A- 2 416 926**

(73) Patentinhaber : **CIBA-GEIGY AG**
**Klybeckstrasse 141**
**CH-4002 Basel (CH)**

(72) Erfinder : **Lacroix, Roger, Dr.**
**Rue Vauban 24**
**F-68300 Village-Neuf (FR)**
Erfinder : **Marfurt, Hans-Rudolf, Dr.**
**Habsburgerstrasse 2**
**D-4310 Rheinfelden (DE)**

**EP 0 126 830 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zum Umwandlung schwerlöslicher Salze anionischer Farbstoffe und optischer Aufheller in leichter lösliche Salze.

Die Löslichkeit der Salze anionischer Farbstoffe und optischer Aufheller in Wasser oder organischen Lösungsmitteln hängt nicht nur von der Konstitution des Farbstoffs oder Aufhellers ab, sondern wird vor allem auch von der jeweiligen Salzform, d. h. dem Kation bestimmt. So sind beispielsweise die bei der Synthese im allgemeinen anfallenden Natriumsalze vielfach nicht gut wasserlöslich, hingegen zeigen die gleichen Farbstoffe oder Aufheller in der Lithiumsalzform eine wesentlich höhere Wasserlöslichkeit (siehe z. B. DE-C-16 44 308).

Zur Herstellung konzentrierter Farbstoff- bzw. Aufhellerlösungen, die heute mehr und mehr als Flüssigmarken im Handel sind, benötigt man Farbstoff- bzw. Aufhellersalze mit einer guten Wasserlöslichkeit, denn nur so lässt sich der Lösungsmittelanteil in den Präparaten möglichst gering halten. Daneben ist aber auch bei der Herstellung fester Präparate eine hohe Löslichkeit des Farbstoffs oder Aufhellers von Vorteil, denn diese ermöglicht eine schonende und energiesparende Trocknung, da hochkonzentrierte Ausgangslösungen eingesetzt werden können.

In der Vergangenheit hat es nicht an Versuchen gefehlt, die Kationen schwerlöslicher Farbstoff- oder Aufhellersalze auszutauschen, um so deren Wasserlöslichkeit zu erhöhen. Für Stilbenazo(xy)-farbstoffe beispielsweise sind heute bereits eine ganze Reihe verschiedener Verfahren bekannt, wie etwa selektive Ausfällung von Natriumionen mittels Hexafluorkieselsäure in Gegenwart von Alkanolamin (DE-A-24 51 219) oder eine zweifache Umsalzung unter Phasentrennung (EP-A-00 53 220). Ferner wird in der DE-OS 28 05 891 für den Kationen- bzw. Anionenaustausch ein Membrantrennverfahren, wie z. B. die Diafiltration angegeben. Nach diesem Verfahren lassen sich jedoch Umsalzungen, etwa von sulfogruppenhaltigen Farbstoffen nur in Gegenwart solcher Kationen durchführen, deren Molekulargewicht mindestens gleich oder grösser als dasjenige der Farbstoffe ist, um so deren gleichzeitige Abtrennung aus der Farbstofflösung zu verhindern.

Aufgabe war es, ein Verfahren zu finden, das einfach in der Durchführung ist und keine besonderen Anforderungen an das Molgewicht, der für den Austauch in Frage kommenden Kationen stellt.

Diese Aufgabe wird überraschenderweise mit Hilfe der sog. Donnan-Dialyse gelöst (zur Theorie der Donnan-Dialyse siehe S.T. Hwang, K. Kammermeyer ; Membranes in Separations ; Wiley & Sons, N.Y. 1975).

Gegenstand der vorliegenden Erfindung ist somit ein Verfahren zur Umwandlung schwerlöslicher Salze von Farbstoffen und optischen Aufhellern in leichter lösliche Salze mittels Kationenaustausch, ohne Zwischenisolierung der freien Farbsäure, wobei der Kationenaustausch mit Hilfe der Donnan-Dialyse durchgeführt wird.

Für die Donnan-Dialyse verwendet man vorteilhaft eine Austauscherzelle, die mittels einer semipermeablen Membran in zwei Kammern geteilt ist, die jeweils eine zur Membranoberfläche tangentiale Einlass- und eine zentrale Auslassöffnung besitzen. Sowohl die Farbstoff- bzw. Aufhellerlösung oder -suspension, als auch die Dialyselösung werden während des Austauschvorganges mittels einer Pumpe aus einem Vorratsbehälter durch die Austauscherzelle und wieder in diesen zurückgepumpt, wodurch sich der Kreislauf schliesst. Dabei sollte die Zwangszirkulation durch die Austauscherzelle vorzugsweise so geführt werden, dass die Lösungen bzw. Suspension in möglichst turbulenter Strömung an der Membran vorbeifliesst.

Die von den Pumpen in das geschlossene System eingebrachte, als Temperaturerhöhung messbare Energie, kann gegebenenfalls mittels Wärmeaustauschern abgeführt werden. Durchgeführt wird die Donnan-Dialyse zweckmässiger Weise bei einer Temperatur von 20 bis 25 °C.

Figur 1 zeigt schematisch die Apparatur, mit der das erfindungsgemässe Verfahren durchgeführt wird : Ⓐ Austauscherzelle, Ⓜ Membran, Ⓕ Vorratsbehälter mit Farbstoff- oder Aufhellerlösung bzw. -suspension, Ⓓ Vorratsbehälter mit Dialyselösung, Ⓦ Wärmeaustauscher und Ⓟ Pumpen.

Bei der Donnan-Dialyse handelt es sich um einen Membranprozess, der ohne Anwendung von Druck durchgeführt wird. Die verwendeten Membranen haben die Eigenschaft, sowohl für das Kation des Farbstoff- bzw. Aufhellersalzes, als auch für das Kation der Dialyselösung durchlässig zu sein, jedoch das Anion der Dialyselösung kaum und das Farbstoff- bzw. Aufhelleranion nicht durchtreten zu lassen.

Bei den Membranen handelt es sich um Kationenaustauschermembranen, deren Polymergerüst durch anionische Gruppen enthaltende polyfunktionelle Verbindungen modifiziert ist und deren Poren einen Durchmesser von 0,1 bis 50 µm aufweisen. Bevorzugt gelangen Polysulfonmembranen zur Anwendung.

Das Polymergerüst der Membran besteht aus natürlichen, halbsynthetischen oder synthetischen Materialien, die als reaktionsfähige Gruppen beispielsweise Hydroxyl-, Amino- und/oder Amidoximgruppen enthalten. Derartige Materialien können mit geeigneten Reagenzien umgesetzt werden, die einerseits anionische Gruppen und andererseits mindestens eine unter Bildung einer chemischen (kovalenten) Bindung reaktionsfähige Gruppierung enthalten.

Beispielsweise können folgende polymere Verbindungen in der angegebenen Weise modifiziert werden :

Celluloseacetate, z. B. solche mit niedrigem Acetylgruppengehalt, aber auch höher acylierte Cellulose, z. B. sog. Zweieinhalbacetat, oder

Polyvinylalkohole, oder

Polyacrylnitril und Copolymere aus Acrylnitril und anderen äthylenisch ungesättigten Monomeren.

Als reaktive Reagenzien, die eine oder mehrere anionische Gruppen enthalten, kommen neben farblosen auch farbige Verbindungen, wie sulfogruppenhaltige Reaktivfarbstoffe in Betracht. Als anionische Gruppen sind neben der Sulfogruppe auch die Sulfatogruppe und der Carboxylrest zu nennen.

Es lassen sich aber auch Membranen verwenden deren Grundgerüst aus einem inerten Polymer, wie z. B. Polyester oder Polyäthylen besteht, welches mit einem Austauscherharz belegt wurde. Bei der Herstellung derartiger Membranen bringt man entweder ein fertiges, bereits anionische Gruppen enthaltendes Austauscherharz auf den polymeren Träger auf oder aber das Austauscherharz wird erst auf dem Träger polymerisiert und anschliessend nach den üblichen Methoden, beispielsweise durch Sulfonieren modifiziert.

Ferner kommen auch sowohl durch kationische als auch anionische Gruppen modifizierte Membranen in Frage, wobei jedoch die Zahl der anionischen Gruppen die der kationischen überwiegt. Bei den kationischen Gruppen handelt es sich z. B. um die Ammonium-, Phosphonium- oder Sulfoniumgruppe.

Mit derartigen Membranen werden zu Beginn der Dialyse Fluxraten von bis zu über 60 Mol, bezogen, auf 1 $m^2$ Membranfläche und 24 Stunden Betriebsdauer erreicht.

Bei der Dialyse von Farbstoffen bzw. Aufhellern, die in der Natriumsalzform vorliegen, wird beispielsweise bei Anwendung einer 1-molaren Lithiumchloridlösung als Dialyselösung ein nahezu vollständiger Ionenaustausch erreicht. So liegt die mittlere Natriumionenkonzentration nach einer Betriebsdauer von 3 bis 4 Tagen, je nach Konzentration der Farbstofflösung und Grösse der Membranfläche bei weniger als 1 g pro Liter.

Mittels Donnan-Dialyse lassen sich beispielsweise die Kationen der folgenden anionischen, vor allem sulfogruppenhaltigen Farbstoffe austauschen : Nitro-, Aminoketon-, Ketonimin-, Methin-, Nitrodiphenylamin-, Chinolin-, Aminonaphthochinon- oder Cumarinfarbstoffe, insbesondere Anthrachinon- und Azofarbstoffe, wie Monoazo- und Disazofarbstoffe oder auch 1 : 1- und 1 : 2-Metallkomplexfarbstoffe, sowie Stilbenazo(xy) farbstoffe. In Frage kommen ferner auch Farbstoffe der genannten Klassen, die einen oder mehrere faserreaktive Rest enthalten.

Die Farbstoffe liegen üblicherweise in der Natriumsalzform oder auch als Kalium- bzw. Ammoniumsalz vor. Wird der Farbstoff als Rohfarbstoff eingesetzt, so ist es zweckmässig, diesen vor Durchführung der Dialyse zu entsalzen. Das geschieht am einfachsten mit Hilfe eines Membrantrennverfahrens, wie z. B. der Hyperfiltration.

Als Dialyselösung kommen vor allem wässrige Lösungen von Lithiumsalzen, z. B. Lithiumhalogeniden, insbesondere Lithiumchlorid in Frage. Aber nicht nur Lösungen von Lithiumsalzen, sondern auch Ammoniumsalzlösungen oder auch Lösungen von Alkanolammoniumsalzen sind geeignet. Bei Stilbenazo(xy) farbstoffen hat man beispielsweise festgestellt, dass diese in der Alkanolammoniumsalzform, also etwa als Di- oder Triäthanolammoniumsalz wesentlich besser wasserlöslich sind als in der Natriumsalzform.

Durch Ueberführen in eine andere Salzform lässt sich die Löslichkeit der Farbstoffe bzw. optischen Aufheller z. T. beträchtlich steigern. So wird beispielsweise die Wasserlöslichkeit der Natriumsalze sulfogruppenhaltiger Azofarbstoffe bei deren Ueberführung in die entsprechenden Lithiumsalze verdoppelt bis verdreifacht.

Die Konzentration der dem Ionenaustausch unterworfenen Farbstoff- bzw. Aufhellerlösung oder -suspension beträgt vorteilhaft 10 bis 500 g/l, vorzugsweise 10 bis 300 g/l. Die Dialyselösung verwendet man allgemein in einer Konzentration von 0,5 bis 3-molar, vorzugsweise ca. 1-molar.

Es wird stets mit einem Ueberschuss an Dialyselösung gearbeitet. Um in kurzen Zeiträumen einen möglichst weitgehenden Ionenaustausch zu erzielen, wird die Dialyselösung jeweils nach 24 stündiger Betriebsdauer gegen eine frische Lösung ausgetauscht.

Die nach Durchführung der Donnan-Dialyse erhaltene Farbstoff- oder Aufhellerlösung kann durch Hyperfiltration aufkonzentriert und gegebenenfalls nach Zugabe von Zusätzen, wie Bindemitteln, Entstäubungsmitteln, Dispergiermitteln und/oder Coupagemitteln, durch Trocknen in ein festes Farbstoffpräparat überführt werden. Dank der erhöhten Farbstoffkonzentration benötigt man weniger Energie zum Trocknen. Man verwendet übliche Trocknungsverfahren, insbesondere die Sprühtrocknung.

Die aufkonzentrierte Farbstoff- oder Aufhellerlösung kann aber auch direkt zu einer lagerstabilen Flüssigformulierung verarbeitet werden. In diesem Fall ist, gegebenenfalls nach Zugabe von den, für Flüssigformulierungen üblichen Beigaben, wie Textilhilfsmitteln, schaumdämpfenden Mitteln, Gefrierschutzmitteln, Feuchthaltemitteln, Dispergiermitteln und/oder Antimikrobika, die Farbstoff- oder Aufhellerlösung nur noch durch Verdünnen und/oder mit Hilfe von Coupagemitteln auf einen vorgegebenen Endfarbstoffgehalt einzustellen.

Verwendung finden die Farbstoff- oder Aufhellerpräparate zur Herstellung von Färbe-/Aufhellbädern, Klotzflotten oder Druckpasten, die sich vor allem zum Färben/Aufhellen oder Bedrucken von Textilmaterialien aus natürlichen oder synthetischen Fasern und zum Färben von Papier eignen.

Die folgenden Beispiele dienen der Erläuterung der Erfindung. Die Austauschgeschwindigkeit für die Natriumionen (Fluxrate) ist angegeben in Mol pro $m^2$ Membranfläche und Tag [$Mol/m^2 \cdot d$].

Allgemeine Verfahrensweise

Es werden jeweils 0,5 l Farbstofflösung oder -suspension und 2 l 1-molare Lithiumchloridlösung eingesetzt, wobei die Lithiumchloridlösung nach einer Betriebsdauer von jeweils 24 Stunden gegen eine frische Lösung ausgetauscht wird. Die beiden Flüssigkeitsströme werden durch die Dialysezelle an der Kationenaustauschermembran vorbeigepumpt und durch periodische Probenentnahme und Bestimmung der Natriumionenkonzentration der Verlauf des Ionenaustausches verfolgt. Als Membran wird eine Polysulfonmembran mit einer Fläche von 38 $cm^2$ verwendet. Beim Farbstoff der jeweils angegebenen Formel handelt es sich um den Rohfarbstoff, der mittels Hyperfiltration entsatzt wurde.

Beispiel 1

Der Farbstoff der Formel

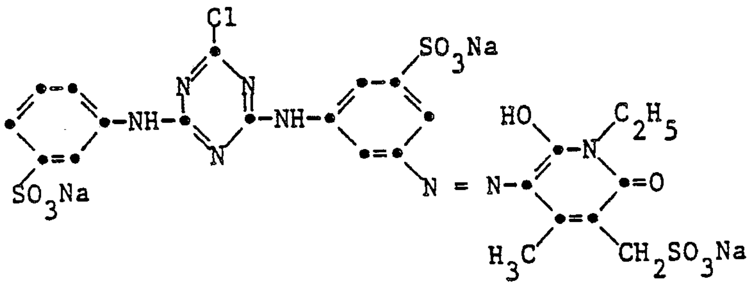

wird als 22 gew.%ige wässrige Lösung eingesetzt. Nach 72 stündiger Dialyse sind ca. 87 % der Natriumionen gegen Lithiumionen ausgetauscht. Dadurch wird die Löslichkeit des Farbstoffs von 180 g/l auf 350 g/l gesteigert.

| Zeit [h] | Na-Gehalt der Farbstofflösung [g/l] | Fluxrate [$Mol/m^2 \cdot d$] |
|---|---|---|
| 0 | 19,3 | |
| 24 | | 62,5 |
| 48 | | 46,6 |
| 72 | 2,9 | 30,3 |
| 96 | 0,6 * | |

* durch Interpolation bestimmt.

Beispiel 2

Der 1 : 2-Metallkomplexfarbstoff der Formel

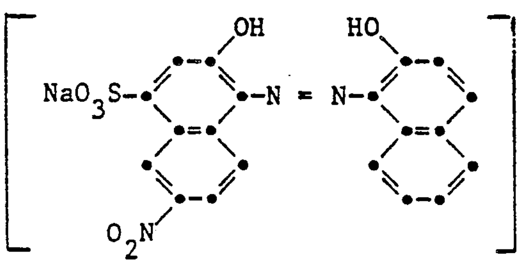

1 : 2-Chromkomplex

wird als ca. 10 gew.%ige Lösung (kolloidale Lösung) der Donnan-Dialyse unterworfen. Nach 96 stündiger Betriebsdauer sind 87 % der Natriumionen gegen Lithiumionen ausgetauscht. Die maximale Löslichkeit des Farbstoffs in Wasser beträgt nun 160 g/l. In der Natriumsalzform ist der Farbstoff nur bis zu 80 g/l

löslich. Während der Dialyse erfolgt eine Aufkonzentrierung der Farbstofflösung auf ein Endvolumen von 400 ml.

| Zeit [h] | Na-Gehalt der Farbstofflösung [g/l] | Fluxrate [Mol/m$^2$•d] |
|---|---|---|
| 0 | 4,1 | |
| 24 | | 19,5 |
| 48 | | 4,6 |
| 72 | | 3,1 |
| 96 | 0,67 | 2,2 |

## Beispiel 3

Die 3,9 gew.%ige Suspension eines Gemisches gelber Stilbenazo(xy) farbstoffe, erhalten durch Selbstkondensation von 4-Nitrotoluol-2-sulfonsäure in Gegenwart von Natronlauge wird der Donnan-Dialyse unterworfen. Die Wasserlöslichkeit der Stilbenazo(xy) farbstoffe in der Natriumsalzform ist sehr gering und liegt im Bereich von 1 g/100 ml. Nach 3 tägiger Dialyse erhält man das Farbstoffgemisch fast vollständig in der Lithiumsalzform, die Löslichkeit liegt nun bei ca. 13 g/100 ml. Während der Dialyse findet neben dem Ionenaustausch gleichzeitig eine Aufkonzentrierung statt ; Endvolumen der Farbstofflösung ist 390 ml.

| Zeit [h] | Na-Gehalt der Farbstofflösung [g/l] | Fluxrate [Mol/m$^2$·d] |
|---|---|---|
| 0 | 5,4 | |
| 24 | | 39,5 |
| 48 | | 3,95 |
| 72 | 0,04 | 0,5 |

## Beispiel 4

Die Reaktivfarbstoffe der im folgenden angegebenen Formeln werden der Donnan-Dialyse unterworfen (jeweils 500 ml einer 20 bis 25 gew.%igen Farbstofflösung bzw.-suspension) und so von der Natriumsalzform in das entsprechende Lithiumsalz überführt und zwar mit einer Austauschrate zwischen 92 und 97 %. Die Daten zum Ionenaustausch sind im Anschluss an die Formeln in tabellarischer Form zusammengefasst.

Farbstoff (I)

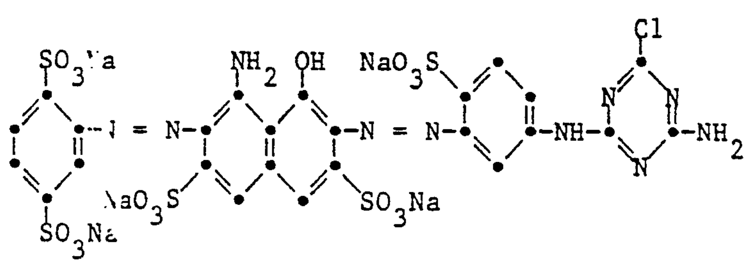

Farbstoff (II)

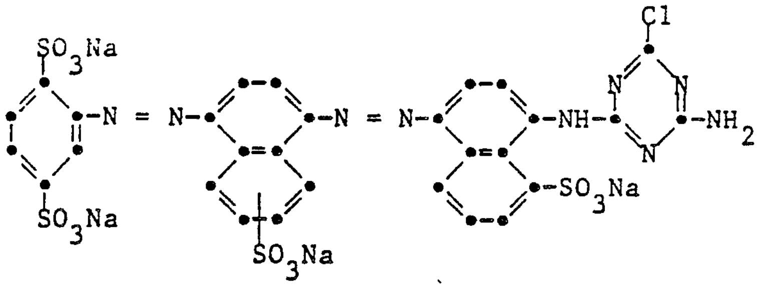

Farbstoff (III)

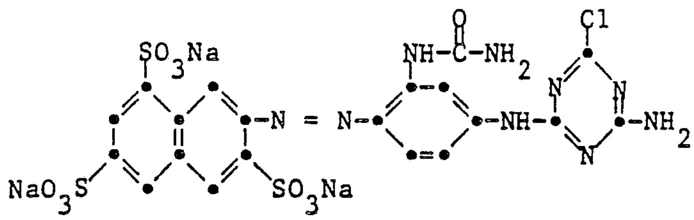

Farbstoff (IV)

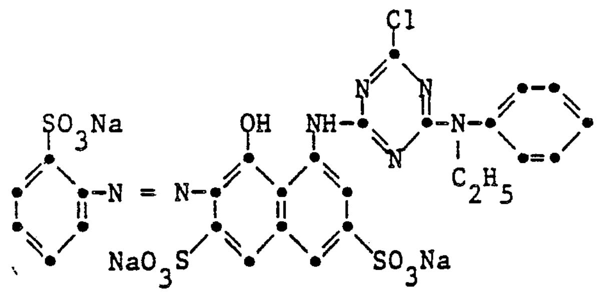

(Siehe Tabelle Seite 7 f.)

| Farbstoff | Zeit [h] | Na-Gehalt der Farbstofflösung [g/l] | Fluxrate [Mol/$m^2$•d] | Löslichkeit des Farbstoffs vor und nach der Donnan-Dialyse [g/l] | |
|---|---|---|---|---|---|
| | | | | vor | nach |
| I | 0 | 21,7 | | | |
| | 24 | 12,2 | 77,2 | | |
| | 120 | 1,1 | 7,0 | ca. 100 | 250 |
| II | 0 | 22,0 | | | |
| | 24 | 12,5 | 78,0 | | |
| | 120 | 1,5 | 9,0 | 240 | 360 |
| III | 0 | 16,0 | | | |
| | 24 | 8,9 | 59,8 | | |
| | 120 | 0,5 | 3,6 | ca. 120 | 280 |
| IV | 0 | 24,6 | | | |
| | 24 | 15,2 | 74,9 | | |
| | 120 | 1,9 | 11,4 | 230 | 290 |

**Patentansprüche**

1. Verfahren zur Umwandlung schwerlöslicher Salze anionischer Farbstoffe und Aufheller in leichter lösliche Salze mittels Kationenaustausch, ohne Zwischenisolierung der freien Farbsäure, dadurch gekennzeichnet, dass der Kationenaustausch unter Anwendung der Donnan-Dialyse durchgeführt wird.

2. Verfahren gemäss Anspruch 1, dadurch gekennzeichnet, dass man als schwerlösliche Salze die Natrium-, Kalium- oder Ammoniumsalze der Farbstoffe bzw. Aufheller einsetzt.

3. Verfahren gemäss Anspruch 1, dadurch gekennzeichnet, dass man die Donnan-Dialyse in einer Austauscherzelle durchführt, in der die Farbstoff-bzw. Aufhellerlösung oder -suspension und die Dialyselösung durch eine semipermeable Membran voneinander getrennt sind, und beide Lösungen bzw. Suspension und Lösung an der Membranoberfläche vorbeigeführt werden.

4. Verfahren gemäss Anspruch 3, dadurch gekennzeichnet, dass als semipermeable Membran eine Kationenaustauschermembran verwendet wird, deren Polymergerüst durch ionische Gruppen enthaltende polyfunktionnelle Verbindungen modifiziert ist und deren Poren einen Durchmesser von 0,1 bis 50 µm aufweisen.

5. Verfahren gemäss Anspruch 3, dadurch gekennzeichnet, dass man als Membran eine Polysulfonmenbran verwendet.

6. Verfahren gemäss Anspruch 1, dadurch gekennzeichnet, dass man als Dialyselösung eine Lithiumsalzlösung, insbesondere eine Lithiumchloridlösung verwendet.

7. Verfahren gemäss Anspruch 3, dadurch gekennzeichnet, dass die Konzentration der Farbstoff- bzw. Aufhellerlösung oder -suspension 10 bis 500 g/l beträgt und die Dialyselösung 0,5 bis 3-molar ist.

8. Verfahren gemäss Anspruch 1, dadurch gekennzeichnet, dass die Farbstoff- oder Aufhellerlösung im Anschluss an die Donnan-Dialyse mittels Hyperfiltration aufkonzentriert wird.

**Claims**

1. A process for converting sparingly soluble salts of anionic dyes and fluorescent whitening agents into more readily soluble salts by means of cation exchange without intermediate isolation of the free dye acid, which process comprises carrying out the cation exchange by applying Donnan dialysis.

2. A process according to claim 1, wherein the sparingly soluble salts are the sodium, potassium or ammonium salts of dyes or fluorescent whitening agents.

3. A process according to claim 1, wherein the Donnan dialysis is carried out in an exchange cell in which the dye of fluorescent whitening agent solution or suspension and the dialysis solution are separated from each other by a semipermeable membrane, and the two solutions or the suspension and solution are passed along the surface of the membrane.

4. A process according to claim 3, wherein the semipermeable membrane used is a cation exchange membrane whose polymer backbone has been modified with polyfunctional compounds containing ionic groups and whose pores have a diameter of 0.1 to 50 µm.

5. A process according to claim 3, wherein the membrane is a polysulfone membrane.

6. A process according to claim 1, wherein the dialysis solution used is a lithium salt solution, in particular a lithium chloride solution.

7. A process according to claim 3, wherein the concentration of the dye or fluorescent whitening agent solution or suspension is 10 to 500 g/litre and the dialysis solution is 0.5 to 3 M.

8. A process according to claim 1, wherein the dye or fluorescent whitening agent solution is concentrated after the Donnan dialysis by means of hyperfiltration.

**Revendications**

1. Procédé pour la transformation de sels difficilement solubles de colorants anioniques et azurants optiques anioniques en sels plus facilement solubles, au moyen d'un échange de cations, sans isolement intermédiaire de la forme acide libre des colorants, caractérisé par le fait que l'on effectue l'échange de cations en utilisant la dialyse de Donnan.

2. Procédé selon la revendication 1, caractérisé par le fait que l'on utilise en tant que sels difficilement solubles, les sels de sodium, potassium ou ammonium des colorants ou respectivement azurants optiques.

3. Procédé selon la revendication 1, caractérisé par le fait que l'on effectue la dialyse de Donnan dans une cellule d'échanges dans laquelle la solution ou suspension de colorant ou, respectivement, d'azurant optique, et la solution de dialyse, sont séparées l'une de l'autre par une membrane semiperméable, et on fait passer à la surface de la membrane les deux solutions ou la suspension et la solution.

4. Procédé selon la revendication 3, caractérisé par le fait que l'on utilise en tant que membrane semiperméable une membrane échangeuse de cations dont le squelette polymère est modifié par des composés polyfonctionnels contenant des groupes ioniques, et dont les pores présentent un diamètre de 0,1 à 50 µm.

5. Procédé selon la revendication 3, caractérisé par le fait que l'on utilise en tant que membrane une membrane polysulfonée.

6. Procédé selon la revendication 1, caractérisé par le fait que l'on utilise en tant que solution de dialyse, une solution d'un sel de lithium, en particulier une solution de chlorure de lithium.

7. Procédé selon la revendication 3, caractérisé par le fait que la concentration de la solution ou suspension de colorant ou, respectivement, d'azurant optique, est de 10 à 500 g/litre, et la solution de dialyse est 0,5 à 3 M.

8. Procédé selon la revendication 1, caractérisé par le fait qu'après la dialyse de Donnan, on concentre la solution de colorant ou d'azurant optique par hyperfiltration.

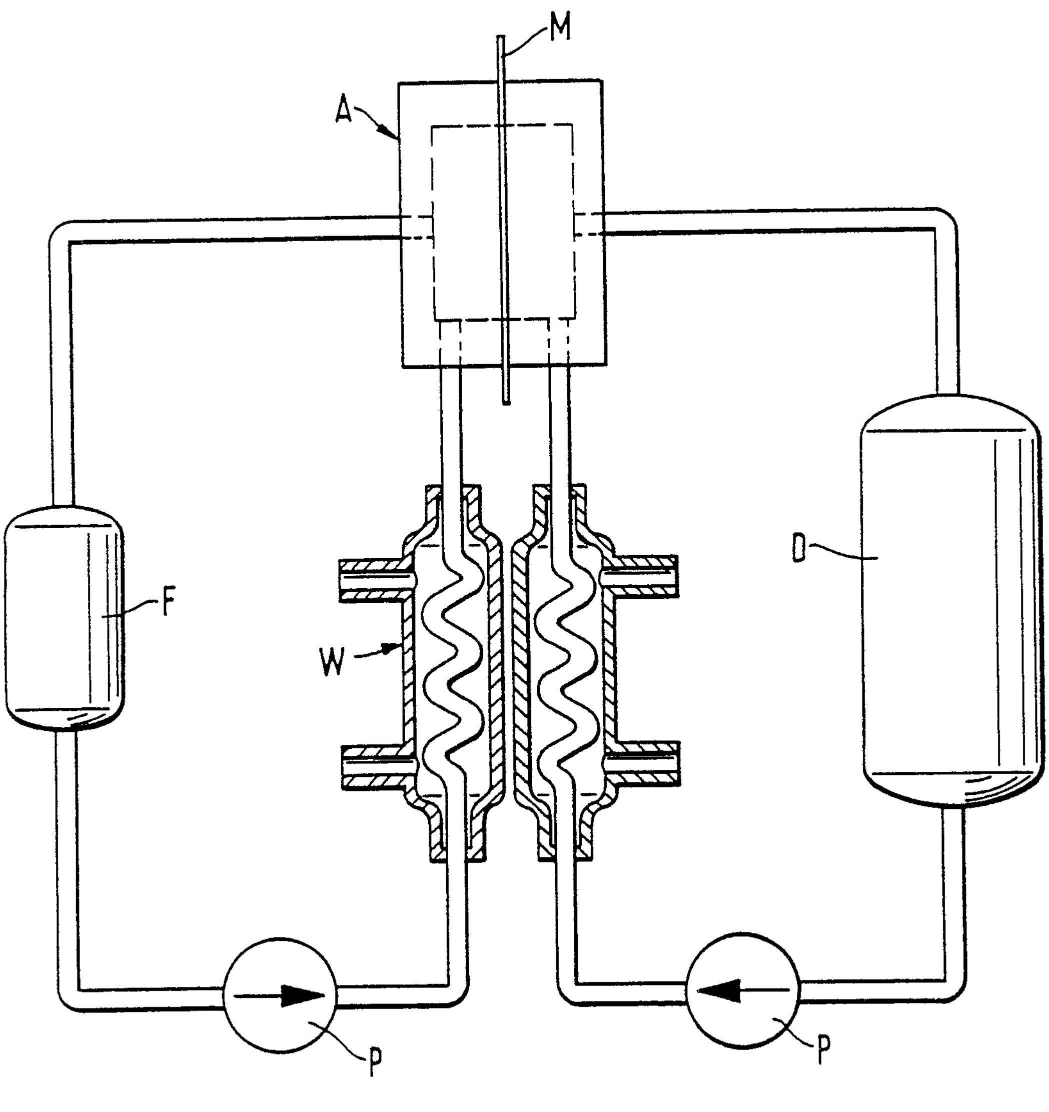
M
A
F
W
D
P
P